# EUROPÄISCHE PATENTSCHRIFT

(11) **EP 1 870 271 B1**
(45) Veröffentlichungstag und Bekanntmachung des Hinweises auf die Patenterteilung: **18.01.2012**
(21) Anmeldenummer: 07011998.7
(22) Anmeldetag: 19.06.2007
(51) Int. Cl.: B60J 1/20

(54) **Fensterrollo für ein Fahrzeugfenster**
Roller blind for a vehicle window
Store pour une fenêtre de véhicule

(30) Priorität: 20.06.2006 DE 102006028351
(43) Veröffentlichungstag der Anmeldung: 26.12.2007
(73) Patentinhaber: HS Products Engineering GmbH, 82239 Alling (DE)
(72) Erfinder: Ziegenbein, Werner, 81929 München (DE)
(74) Vertreter: Kuhlmann, Kai

(56) Entgegenhaltungen:
- EP-A- 1 319 772
- EP-A- 1 626 152
- EP-A- 1 645 448

## Beschreibung

Die Erfindung betrifft ein Fensterrollo für ein Fahrzeugfenster gemäß dem Oberbegriff des Patentanspruches 1.

Ein derartiges Fensterrollo ist aus EP 1 645 448 A1 bekannt. Das bekannte Fensterrollo weist eine Rollowelle auf, auf welche eine Rollobahn auf- und abgewickelt werden kann. Beim Abwickeln der Rollobahn von der Rollowelle werden die von der Antriebseinrichtung erzeugten Auszugskräfte über Seilzüge auf ein ausziehbares Rollobahnende, welches als Auszugsstab ausgebildet sein kann, übertragen. Hierzu sind die Seilzüge mit den beiden Enden des Auszugsstabes bzw. des ausziehbaren Rollobahnendes verbunden, und Seilrollen der Seilzüge sind koaxial zur Rollowelle und drehbar gegenüber der Rollowelle gelagert. Für ein Straffziehen der Rollobahn während des Auf- und Abwickelvorganges ist eine federelastische Ausgleichseinrichtung vorgesehen.

Des Weiteren offenbart die Druckschrift EP 1 626 152 A1 ein Schutzrollo für Glasdächer, und insbesondere für Schiebedächer bei einem Kraftfahrzeug, wobei an einer Wickelwelle eine Rollobahn (Rollotuch) befestigt ist und auf diese Wickelwelle aufgewickelt werden kann. An Wickelscheiben, die jeweils an beiden Enden der Wickelwelle angeordnet sind, ist zwischen einer Rollowelle, an der die Wickelwelle angebracht ist, und der jeweiligen Wickelscheibe ein Federglied vorgesehen, mit dessen Hilfe ein Relativdrehmoment zwischen diesen beiden Teilen erzeugt werden kann. Die Wickelscheibe in Verbindung mit dem Federelement bildet einen Federmotor für die Wickelwelle, mit der die Wickelscheibe verbunden ist, und dient als eine Spanneinrichtung zum Spannen der Rollobahn zwischen der Wickelwelle und einem Betätigungsstab am Anfang der Rollobahn, so dass die Spannung der Rollobahn ungeachtet ihrer Stellung an dem abzudeckenden Fenster aufrechterhalten wird. Die Federeinrichtung kann in Form einer Schraubenfeder ausgeführt sein, die innerhalb der Wickelwelle angeordnet werden kann. Eine Spiralfeder kann innerhalb der Wickelscheibe angeordnet sein. An dem Betätigungsstab der Rollobahn ist ein Betätigungselement in Form eines Seils befestigt, wobei das Seil um die jeweilige Wickelscheibe zu beiden Seiten der Rollobahn gewickelt ist. Die Spannkraft auf der Rollobahn wird mittels dieser Seile aufgebracht.

Der Erfindung liegt demgegenüber die Aufgabe zugrunde, ein Fensterrollo der eingangs genannten Art derart auszugestalten, dass die von der Antriebseinrichtung gelieferten Antriebskräfte während des Auf- und Abwickelns der Rollobahn gleichmäßig auf die Rollobahn übertragen werden.

Diese Aufgabe wird erfindungsgemäß durch die Merkmale des Patentanspruches 1 gelöst. In den neuen Unteransprüchen sind vorteilhafte Weiterbildungen der Erfindung angegeben.

Bei der Erfindung ist zwischen jeder der beiden Seilrollen und der Rollowelle jeweils eine im aufgewickelten Zustand der Rollobahn gespannte Feder vorgesehen. Die beiden Federn, welche an beiden Enden der Rollowelle angeordnet sind, üben beim Abwickeln der Rollobahn auf das ausziehbare Rollobahnende Auszugskräfte aus, wobei sie sich an der von der Antriebseinrichtung in Bandauszugsrichtung angetriebenen und gedrehten Rollowelle abstützen. Hierzu sind die beiden Federn vorzugsweise als Spiral- oder Rollfedern ausgebildet, deren innere Federenden mit der Rollowelle und deren äußere Federende mit den Seilrollen verbunden sind. Die von den Federn auf die Seilrollen ausgeübten Auszugskräfte werden über längliche Zugelemente, beispielsweise Zugseile oder Zugbänder oder dergleichen, auf das ausziehbare Rollobahnende, mit welchem die Zugelemente verbunden sind, übertragen. Vorzugsweise sind hierzu die einen Zugelementenden mit dem ausziehbaren Rollobahnende und die anderen Zugelementenden mit den Seilrollen verbunden, wobei die länglichen Zugelemente über Umlenkrollen, die in der Nähe der oberen Fensterbegrenzung angeordnet sind, geführt werden.

Insbesondere sind die Seilrollen innerhalb eines vorbestimmten Winkelbereiches, der kleiner als 360° ist und vorzugsweise etwa 180° betragen kann, gegenüber der Rollowelle drehbar gelagert. Innerhalb dieses Winkelbereiches wird beim Abwickeln der Rollobahn von der Rollowelle die Auszugskraft auf das ausziehbare Rolloende übertragen, wobei, wie schon erläutert, sich die hierbei wirkenden Federn gegenüber der von der Antriebseinrichtung angetriebenen Rollowelle oder gegenüber den drehfest mit der Rollowelle verbundenen Antriebswellenteilen abstützen.

Der vorbestimmte Winkelbereich kann gemäß einer weiteren Ausgestaltung durch Anschläge bestimmt werden, welche drehfest mit der Seilrolle und der Rollowelle verbunden sind. Hierzu können die Anschläge an wenigstens einem der Federgehäuse, welche drehfest mit den Seilrollen verbunden sind, und an einem der Antriebswellenteile vorgesehen sein. Hierdurch ist ferner gewährleistet, dass die auf die Rollowelle wirkende Antriebskraft unmittelbar auf die Seilrollen übertragen wird, wenn bei der Auszugsbewegung ein Widerstand auftritt.

An beiden Enden der Rollowelle können Antriebswellenteile vorgesehen sein, welche drehfest mit der Rollowelle verbunden sind. Die Seilrollen und die Federn können an diesen Antriebswellenteilen angeordnet sein, wobei die Seilrollen drehbar gegenüber diesen Antriebswellenteilen gelagert sind.

Die Antriebswellenteilen können von einer durch die vorzugsweise hohl ausgebildete Rollowelle ragenden einstückigen Antriebswelle, welche an den beiden Rollowellenenden übersteht, gebildet werden. Diese Antriebswelle bzw. die Antriebswellenteile besitzen zur drehfesten Verbindung mit der Rollowelle zumindest im Bereich der Rollowelle einen von der Kreisform abweichenden Querschnitt und weisen an der Umfangsfläche axial verlaufende Zähne oder Rippen auf.

Durch die Erfindung wird eine geräuscharme und Toleranzen entlang der Bewegungsstrecken zu beiden Seiten der Rollobahn ausgleichende Führung beim Auf- und Abwickeln der Rollobahn erreicht.

Beim Aufwickeln der Rollobahn wird die Rollowelle von der Antriebseinrichtung in der zur Auszugsrichtung entgegengesetzten Richtung (Aufwickelrichtung) gedreht, wobei die entsprechende Einzugskraft, welche von der Antriebseinrichtung erzeugt wird, von der Rollowelle auf die Rollobahn übertragen wird. Bei dieser Einzugsbewegung werden die über die Umlenkrolle geführten länglichen Zugelemente von den Seilrollen abgewickelt, wobei die Federn, insbesondere Spiral- oder Rollfedern innerhalb des bestimmten Winkelbereiches auf die gewünschte Vorspannung gegenüber der Rollowelle gebracht wird.

Anhand der Figuren wird an Ausführungsbeispielen die Erfindung noch näher erläutert.

Es zeigt
- Fig. 1: ein erstes Ausführungsbeispiel in Seitenansicht;
- Fig. 2: in schematischer Darstellung wesentliche Bestandteile eines zweiten Ausfüh- rungsbeispiels;
- Fig. 3: eine Detaildarstellung im in Fig. 1 mit A bezeichneten Bereich am rechten Ende der Rollowelle;
- Fig. 4: eine weitere Detaildarstellung im mit A umrandeten Bereich in Fig. 1;
- Fig. 5: eine Detaildarstellung im mit B in Fig. 1 bezeichneten Bereich am linken Ende der Rollowelle; und
- Fig. 6: eine Detaildarstellung im mit C in Fig. 1 bezeichneten Bereich am oberen Seilzugende.

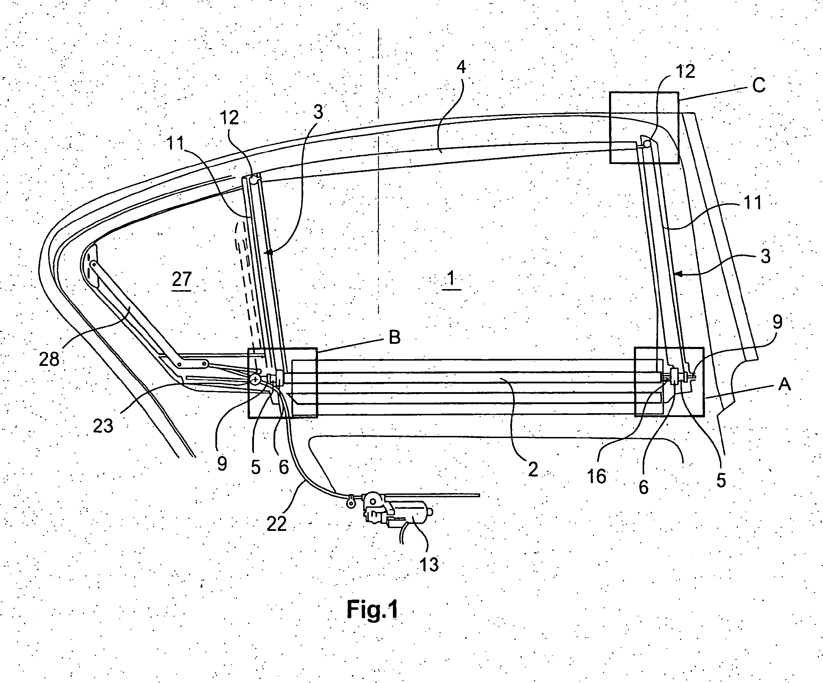

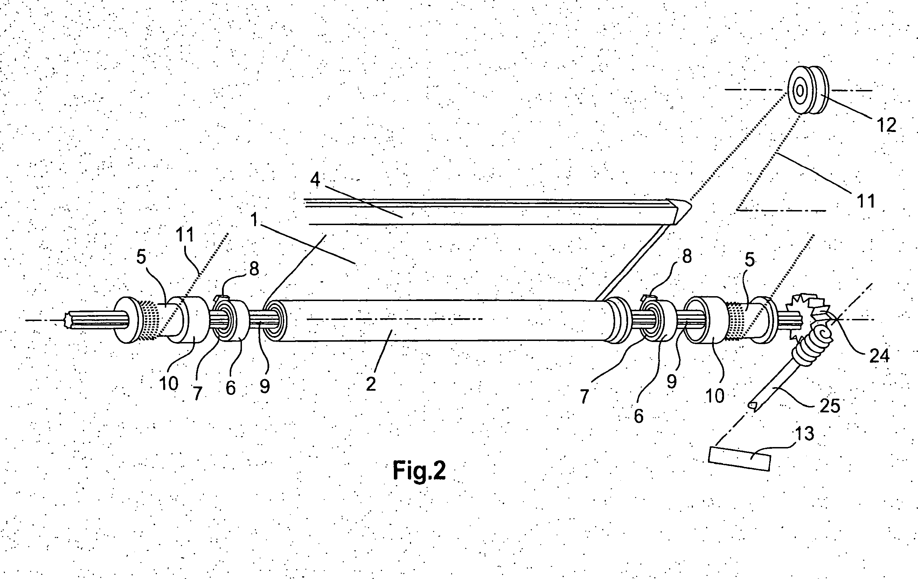

Die in den Fig. 1 und 2 dargestellten Ausführungsbeispiele für ein Fensterrollo sind dazu geeignet, ein seitliches Fahrzeugfenster an der Fahrzeuginnenseite abzudecken. Hierzu weist das jeweilige Ausführungsbeispiel eine Rollobahn 1 auf, die auf einer Rollowelle 2 auf- und abgewickelt werden kann. Die Antriebskraft wird hierfür von einer Antriebseinrichtung 13 geliefert, welche vorzugsweise als Elektromotor, insbesondere Gleichstrommotor ausgebildet sein kann. Die Antriebseinrichtung kann in zwei Antriebsdrehrichtungen angetrieben werden, um die Rollowelle 2 beim Auf- und Abwickeln der Rollobahn 1 in zwei entgegengesetzten Drehrichtungen anzutreiben.

Beim Abwickeln der Rollobahn 1 von der Rollowelle 2 wird diese im Sinne der Ausziehbewegung der Rollobahn in Abwickelrichtung gedreht. Dabei wird die Rollobahn 1 für eine Ausziehbewegung freigegeben.

An den beiden Enden der Rollowelle 2 sind Seilrollen 5 gegenüber der Rollowelle 2 drehbar und koaxial zur Rollowelle 2 gelagert. Die Lagerung erfolgt bei den dargestellten Ausführungsbeispielen auf drehfest mit der Rollowelle 2 verbundenen Antriebswellenteilen 9. Diese Antriebswellenteile 9 können von einer durch die hohl ausgebildete Rollowelle 2 hindurchgeführten einteiligen Antriebswelle gebildet werden. Die Antriebswelle ist durch ihre von der kreisrunden Querschnittsform abweichenden Form drehfest mit der Rollowelle 2 verbunden. Hierzu können längsverlaufende Zähne oder Rippen am Umfang der Antriebswelle bzw. den Antriebswellenteilen 9 zumindest im Bereich der Rollowelle 2 vorgesehen sein.

Mit den beiden Seilrollen 5, welche drehbar auf den Antriebswellenteilen 9 gelagert sind, sind eine Enden von länglichen Zugelementen 11, welche als Seile, Bänder oder dergleichen ausgebildet sein können, verbunden. Die Zugelemente, 11 sind so ausgebildet, dass sie auf die Seilrollen 5 aufgewickelt und von den Seilrollen 5 abgewickelt werden können. Die anderen Enden der Zugelemente 5 sind, wie im einzelnen noch erläutert wird, mit den beiden Enden (rechts und links) in den Fig. 1 und 2 eines ausziehbaren und vorzugsweise starr ausgebildeten Rollobahnendes 4, das als Auszugsstab in bekannter Weise ausgebildet sein kann, verbunden. Zwischen den beiden Enden werden die Zugelemente 11 über Umlenkrollen 12 geführt, welche in der Nähe der oberen Fensterbegrenzung liegen. Die Zugelemente 11, die Umlenkrollen 12 und die Seilrollen 5 bilden Seilzüge, welche an beiden Enden der Rollowelle 2 vorgesehen sind und sich in vertikaler Richtung entlang von Führungsstrecken für die Rollobahn 1 beim Aufund Abwickeln erstrecken. Beim Ausführungsbeispiel der Fig. 1 sind die Drehachsen der Seilrollen 5 und der Umlenkrollen 12 senkrecht zueinander angeordnet und beim Ausführungsbeispiel der Fig. 2 sind die Achsen der Seilrollen 5 und der Umlenkrollen 12 parallel zueinander angeordnet.

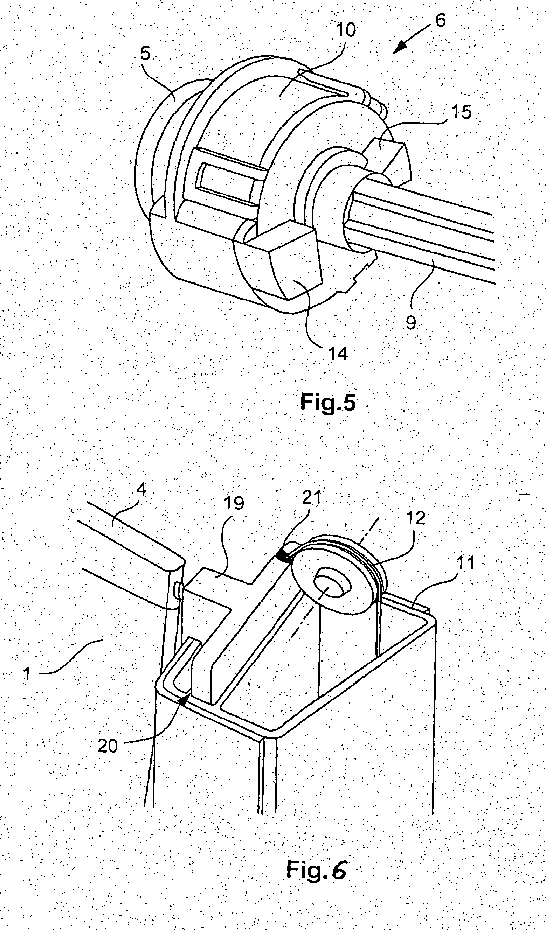

In Fig. 6 ist im einzelnen die Verbindung zwischen dem Zugelement 11 und dem als Auszugsstab ausgebildeten ausziehbaren Rollobahnende 4 dargestellt. Hierzu ist das Ende des Zugelements 11 in einer Befestigungsstelle 21 mit einem Schlitten 19 verbunden, der in einer Schlittenführung 20 im wesentlichen vertikal entlang der Bewegungsstrecke beim Auf- und Abrollen der Rollobahn 1 geführt ist. Mit dem Schlitten 19 ist das ausziehbare Rollobahnende 4 vorzugsweise gelenkig und gegebenenfalls federnd nachgiebig verbunden. Diese Anordnung befindet sich an beiden Seiten des ausziehbaren Rollobahnendes 4.

Zwischen jeder der beiden Seilrollen 5 und der Rollowelle 2 ist jeweils eine Feder 6 vorgesehen, welche im aufgewickelten Zustand der Rollobahn 1 gespannt ist. Beim Ausziehen der Rollobahn 1 in die in der Fig. 1 dargestellte ausgezogene Position wird die Rollowelle 2 von der Antriebseinrichtung 13 mit entsprechender Drehrichtung angetrieben. Hierdurch wird die Rollobahn 1 für eine Auszugsbewegung in die in Fig. 1 dargestellte Position freigegeben. Aufgrund der Vorspannkraft, welche von den beiden Federn 6 an beiden Enden der Rollowelle 2 gebildet ist, wird auf die beiden Seilrollen 5 ein Drehmoment übertragen, mit welchem im Zuge der Freigabe der Rollobahn 1 von der sich drehenden Rollowelle 2 die Zugelemente 11 auf die Seilrollen 5 aufgewickelt werden. Hierdurch werden über die um die Umlenkrollen 12 geführten Zugelemente 11 auf das ausziehbare Rollobahnende 4 Ausziehkräfte ausgeübt und das Rollobahnende 4 wird von der Rollowelle 2 wegbewegt.

Die Federvorspannung wirkt dabei zwischen der sich im Sinne der Rollobahnauszugsrichtung drehenden Rollowelle 2 und den Seilrollen 5. Bei den dargestellten Ausführungsbeispielen sind die Federn 6 an der sich drehenden Rollowelle 2 abgestützt und üben die zum Aufwickeln der Zugelemente 11 auf die Seilrollen 5 erforderlichen Drehmomente aus.

Bei den dargestellten Ausführungsbeispielen sind die Federn 6 als Spiral- oder Rollfedern ausgebildet. Innere Federenden 7 sind drehfest mit der Rollowelle 2 verbunden. Dies kann, wie in den dargestellten Ausführungsbeispielen gezeigt ist, über die Antriebswellenteile 9 erfolgen. Hierzu sind die inneren Federenden 7 fest mit den Antriebswellenteilen 9 verbunden. Äußere Federenden 8 der Federn 6 sind mit den Seilrollen 5 verbunden. Dies erfolgt bei den dargestellten Ausführungsbeispielen über Federgehäuse 10, mit denen die Seilrollen 5 drehfest verbunden sind. Die Federn 6 sind im Innern der Federgehäuse 10 angeordnet.

Beim Aufwickeln der Rollobahn 1 auf die Rollowelle 2 wird die Rollowelle 2 von der Antriebseinrichtung 13 in entgegengesetzter Richtung, d.h. Rollobahn-Einzugsrichtung gedreht. Dabei wird über die Rollowelle 2 auf die Rollobahn 1 in Aufwickelrichtung eine Einzugskraft ausgeübt. Diese Kraft wird über die Zugelemente 11 auf die Seilrollen 5 beim Abwickeln der Zugelemente 11 von den Seilrollen 5 übertragen. Aufgrund des Drehzahlunterschieds zwischen der Rollowelle 2 und den Seilrollen 5 werden die Federn 6 gespannt. Auf diese Weise werden die Federn 6 in den für einen erneuten Rollobahnauszug gewünschten Zustand gebracht.

Die Antriebseinrichtung 13 kann auf verschiedene Art und Weise in Drehantriebsverbindung mit der Rollowelle 2 gebracht werden. Beim Ausführungsbeispiel der Fig. 1 erfolgt dies mittels eines länglichen Schub-/Zugelements 22, welches als Bürstenkabel, flexibler Zahnriemen, flexibles gelochtes Band oder dergleichen ausgebildet sein kann. Das Schub-/Zugelement 22 ist quer zu seiner Bewegungsrichtung flexibel und in Bewegungsrichtung starr ausgebildet. Die Längsbewegung des Schub-/Zugelements 22 wird mit Hilfe eines Getriebes 23, welches als Kegelradgetriebe oder Schneckenradgetriebe ausgebildet sein kann, in eine Drehbewegung der Antriebswelle bzw. der Antriebswellenteile 9 und damit der Rollowelle 2 gewandelt.

Bei dem in Fig. 2 dargestellten Ausführungsbeispiel wird mit Hilfe eines Schneckenradgetriebes 24 die Antriebsdrehbewegung einer Ausgangswelle 25 der Antriebseinrichtung 13 auf das in Fig. 2 rechts angeordnete Antriebswellenteil 9 und damit auf die Rollowelle 2 übertragen.

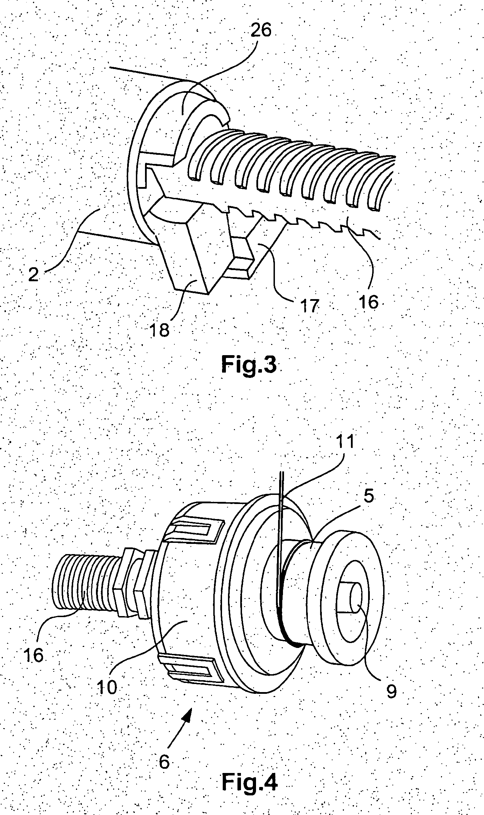

Die Rollowelle 2 kann während des Auf- und Abwickelns der Rollobahn 1 in Richtung ihrer Wellenachse verschoben werden. Durch diese axiale Verschiebung können unterschiedliche Breiten der Rollobahn beim Auf- und Abwickeln ausgeglichen werden. Eine derartige axiale Verschiebbarkeit ist aus DE 20 2004 000 631 U1 bekannt. Beim dargestellten Ausführungsbeispiel ist für die axiale Verschiebbarkeit der Rollowelle eine fahrzeugfeste Spindel 16 vorgesehen, in deren Außengewinde ein am Ende der Rollowelle 2 drehfest angeordnetes Gewindeeingriffsteil 26 eingreift. Das Gewindeeingriffsteit 26 dreht sich zusammen mit der Rollowelle 2. Hierdurch wird eine gesteuerte axiale Bewegung der Rollowelle 2 erreicht. Ferner kann am Rollowellenende ein mit der axialen Bewegung der Rollowelle 2 verschiebbarer Anschlag 18 vorgesehen sein, der gegen einen fahrzeugfesten Anschlag 18 anschlägt, um die Auszugslänge der Rollobahn 2 zu begrenzen. Diese Auszugslänge hängt von der Höhe des abzudeckenden Fahrzeugfensters ab. Beim Aufwickeln der Rollobahn 1 wird die Rollowelle 2 wieder in ihre Ausgangsposition zurückgebracht. Beim Ausführungsbeispiel der Fig. 1 erstreckt sich der rechte Antriebswellenteil 9 durch die fahrzeugfeste Spindel 16 und trägt am äußeren rechten Ende die drehbar gelagerte Seilrolle 5 mit der zugeordneten Feder 6, weiche, wie schon erläutert, als Spiral- oder Rollfeder im drehfest mit der Seilrolle 5 verbundenen Federgehäuse 10 angeordnet ist (Fig. 4).

Aus Fig. 5 ist zu ersehen, dass am Federgehäuse 10 ein Anschlag 14 und am Antriebswellenteil 9 ein Anschlag 15 vorgesehen sind. Durch diese beiden Anschläge wird der Drehwinkelbereich, innerhalb welchem das Federgehäuse 10 und die drehfest damit verbundene Seilrolle 5 gegenüber dem Antriebswellenteil 9 und damit gegenüber der Rollowelle 2 sich verdrehen können, begrenzt. Durch entsprechende Anordnung der Anschläge 14 und 15 wird dieser Drehwinkelbereich auf einen Bereich von geringer als 360° begrenzt. Beim dargestellten Ausführungsbeispiel beträgt dieser Drehwinkelbereich ca. 180°. Es können auch andere Drehwinkelbereiche innerhalb > 0° und < 360° ausgewählt werden. Durch die Anschläge 14 und 15 ist gewährleistet, dass bei einem während des Auf- oder Abwickelns der Rollobahn entlang der Führungsstrecken auftretenden Bewegungswiederstand beispielsweise durch Verkanten oder Fremdkörper, die auf die Rollowelle 2 wirkende Antriebkraft direkt auch auf die Seilrolle 5 übertragen werden kann.

Bei dem in Fig. 1 dargestellten Ausführungsbeispiel kann die Antriebsbewegung des Schub-/Zugelementes 22 auch zur Betätigung eines Dreieckfenster-Rollos 27 ausgenutzt werden. Hierzu wird die Antriebsbewegung des Schub-/Zugelementes 22 auf einen schwenkbaren Ausziehhebel 28 übertragen, wie es aus DE 299 21 860 U1 bekannt ist.

### Bezugszeichenliste

- 1: Rollobahn
- 2: Rollowelle
- 3: Seilzüge
- 4: ausziehbares Rollobahnende
- 5: Seilrollen
- 6: Federn (Spiral- oder Rollfedern)
- 7: innere Federenden
- 8: äußere Federenden
- 9: Antriebswellenteile
- 10: Federgehäuse
- 11: Zugelement (Seil, Band)
- 12: Umlenkrolle
- 13: Antriebseinrichtung
- 14: Anschlag
- 15: Anschlag
- 16: fahrzeugfeste Spindel
- 17: fahrzeugfester Anschlag
- 18: axial verschiebbarer Anschlag
- 19: Schlitten
- 20: Schlittenführung
- 21: Befestigungsstelle
- 22: Schub-/Zugelement
- 23: Getriebe
- 24: Schneckenradgetriebe
- 25: Ausgangswelle
- 26: Gewindeeingriffsteil
- 27: Dreieckfenster-Rollo
- 28: Ausziehhebel

## Patentansprüche

1. Fensterrollo für ein Fahrzeugfenster mit einer Rollowelle, einer Rollobahn, die auf die Rollowelle aufwickelbar und von der Rollowelle abwickelbar ist, und mit zwei Seilzügen, welche beim Abwickeln der Rollobahn auf ein ausziehbares Rollobahnende Auszugskräfte übertragen und an beiden Enden der Rollowelle koaxial zur Rollowelle und drehbar gegenüber der Rollowelle gelagerte Seilrollen aufweisen, wobei zwischen jeder der beiden Seilrollen (5) und der Rollowelle (2) jeweils eine im aufgewickelten Zustand der Rollobahn (1) gespannte Feder (6) vorgesehen ist, und die beiden Federn (6) beim Abwickeln der Rollobahn (1) auf das ausziehbare Rollobahnende (4) Auszugskräfte über die beiden Seilzüge (3) ausüben, **dadurch gekennzeichnet, dass** die Rollobahn mittels von einer Antriebseinrichtung gelieferten Antriebskräfte auf die Rollowelle aufwickelbar und von der Rollowelle abwickelbar ist, wobei die Federn (6) sich an der von der Antriebseinrichtung (13) in Bandauszugsrichtung gedrehten Rollowelle (2) abstützen, und die Seilrolle (5) innerhalb eines bestimmten Winkelbereiches, der kleiner als 360° ist, gegenüber der Rollowelle drehbar ist.

2. Fensterrollo nach Anspruch 1, **dadurch gekennzeichnet, dass** die beiden Federn (6) als Spiral- oder Rollfedern ausgebildet sind, wobei innere Federenden (7) mit der Rollowelle (2) und äußere Federenden (8) mit den Seilrollen (5) verbunden sind.

3. Fensterrollo nach Anspruch 1 oder 2, **dadurch gekennzeichnet, dass** an beiden Enden der Rollowelle (2) Antriebswellenteile (9), welche drehfest mit der Rollowelle (2) verbunden sind, vorgesehen sind und die Seilrollen (5) und die Federn (6) an den Antriebswellenteilen (9) angeordnet sind.

4. Fensterrollo nach einem der Ansprüche 1 bis 3, **dadurch gekennzeichnet, dass** die Seilrollen (5) drehbar gegenüber den Antriebswellenteilen (9) gelagert sind.

5. Fensterrollo nach einem der Ansprüche 1 bis 4, **dadurch gekennzeichnet, dass** die als Spiral- oder Rollfedern ausgebildeten Federn (6) jeweils in einem Federgehäuse (10), das drehfest mit der jeweiligen Seilrolle (5) verbunden ist, angeordnet sind.

6. Fensterrollo nach einem der Ansprüche 1 bis 5, **dadurch gekennzeichnet, dass** der jeweilige Seilzug (3) ein längliches auf die jeweilige Seilrolle (5) aufwickelbares Zugelement (11) aufweist, dessen eines Zugelementende mit dem ausziehbaren Rolloende (4) und dessen anderes Zugelementende mit der jeweiligen Seilrolle (5) verbunden ist.

7. Fensterrollo nach einem der Ansprüche 1 bis 6, **dadurch gekennzeichnet, dass** das Zugelement (11) über eine Umlenkrolle (12), welche an der oberen Fensterbegrenzung oder in der Nähe der oberen Fensterbegrenzung angeordnet ist, geführt ist.

8. Fensterrollo nach einem der Ansprüche 1 bis 7, **dadurch gekennzeichnet, dass** die Rollowelle (2) in beiden Drehrichtungen von der Antriebseinrichtung (13) antreibbar ist.

9. Fensterrollo nach einem der Ansprüche 1 bis 8, **dadurch gekennzeichnet, dass** die Antriebswellenteile (9) Teile einer durch die hohl ausgebildete Rollowelle (2) ragenden einstückigen Antriebswelle (2) sind, wobei die Antriebswelle drehfest mit der Rollowelle (2) verbunden ist.

10. Fensterrollo nach Anspruch 1, **dadurch gekennzeichnet, dass** der Winkelbereich durch drehfest mit der Seilrolle (5) und der Rollowelle (2) verbundene Anschläge (14, 15) bestimmt ist.

11. Fensterrollo nach Anspruch 10, **dadurch gekennzeichnet, dass** der eine Anschlag (14) am drehfest mit der Seilrolle (5) verbundenen Federgehäuse (10) und der andere Anschlag (15) am Antriebswellenteil (9) vorgesehen sind.

12. Fensterrollo nach einem der Ansprüche 1 bis 11, **dadurch gekennzeichnet, dass** die Achsen der Seilrolle (5) und der Umlenkrolle (12) senkrecht oder parallel zueinander stehen.

13. Fensterrollo nach einem der Ansprüche 1 bis 12, **dadurch gekennzeichnet, dass** die Rollowelle (2) während der Auf- und Abwickelbewegung der Rollobahn (1) axial verschiebbar gelagert ist.

## Claims

1. Roller blind for a vehicle window with a roller blind shaft and a roller blind web, the roller blind web being windable up the roller blind shaft and being unwindable of the roller blind shaft, further with two cable pulls, which exert pull-out forces on an extendable end of the roller blind web during the unwinding of the roller blind web and which comprise at both ends of the roller blind shaft cable pulleys mounted coaxially and rotatably to the roller blind shaft, wherein between each of the two cable pulleys (5) and the roller blind shaft (2) a spring (6) is provided, which is under tension if the roller blind web (1) is wound up, and wherein during the unwinding of the roller blind web (1) the two springs (6) exert pull-out forces on the extendable end (4) of the roller blind web by means of the two cable pulls (3), **characterized in that** the roller blind web is windable up the roller blind shaft and unwindable of the roller blind shaft by means of driving forces provided by driving means, wherein the springs (6) are supported by the roller blind shaft (2), being rotated to unwind the roller blind web by the driving means (13), and wherein the cable pulley (5) is rotatable with respect to the roller blind shaft within a certain angular range, which is smaller than 360°.

2. Roller blind for a vehicle window as claimed in claim 1, **characterized in that** the two springs (6) are designed as coil springs or roller springs, wherein inner ends (7) of the springs are connected to the roller blind shaft (2) and outer ends (8) of the springs are connected to the cable pulleys (5).

3. Roller blind for a vehicle window as claimed in claim 1 or 2, **characterized in that** at both ends of the roller blind shaft (2) parts (9) of a drive shaft are provided, which are connected torque proof to the roller
blind shaft (2), and that the cable pulleys (5) and the springs (6) are arranged at the parts (9) of a drive shaft.

4. Roller blind for a vehicle window as claimed in claim 1 to 3, **characterized in that** the cable pulleys (5) are mounted rotatably with respect to the parts (9) of a drive shaft.

5. Roller blind for a vehicle window as claimed in claim 1 to 4, **characterized in that** the two springs (6), which are designed as coil springs or roller springs, are arranged each in a spring housing (10), which is mounted torque proof at the respective cable pulley (5).

6. Roller blind for a vehicle window as claimed in claim 1 to 5, **characterized in that** the respective cable pull (3) comprises an elongated pull element (11), which is windable up the respective cable pulley (5), one end of the pull element connected to the extendable end (4) of the roller blind web, the other end of the pull element connected to the respective cable pulley (5).

7. Roller blind for a vehicle window as claimed in claim 1 to 6, **characterized in that** the pull element (11) is guided by a guide pulley (12), which is arranged at the upper limit of the window or near the upper limit of the window.

8. Roller blind for a vehicle window as claimed in claim 1 to 7, **characterized in that** the roller blind shaft (2) is drivable in both rotational directions by the driving means (13).

9. Roller blind for a vehicle window as claimed in claim 1 to 8, **characterized in that** the parts (9) of a drive shaft are parts of an integral drive shaft (2), which reaches through the hollowly manufactured roller blind shaft (2), wherein the drive shaft is connected torque proof to the roller blind shaft (2).

10. Roller blind for a vehicle window as claimed in claim 1, **characterized in that** the angular range is determined by stops (14, 15), which are torque proof connected to the cable pulley (5) and the roller blind shaft (2).

11. Roller blind for a vehicle window as claimed in claim 10, **characterized in that** one of the stops (14) is designed to be at the spring housing (10), which is connected torque proof to the cable pulley (5), the other stop (15) is designed to be at the parts (9) of a drive shaft.

12. Roller blind for a vehicle window as claimed in claim 1 to 11, **characterized in that** the axis of the cable pulley (5) and the axis of the guide pulley (12) are perpendicular or parallel to each other.

13. Roller blind for a vehicle window as claimed in claim 1 to 12, **characterized in that**, during the winding and unwinding process of the roller blind web (1), the roller blind shaft (2) is mounted axially movable.

## Revendications

1. Store de fenêtre pour une fenêtre de véhicule, avec un arbre de store, avec une bande de store qui peut être enroulée sur l'arbre de store et déroulée de l'arbre de store, et avec deux tirants à câble qui, lors du déroulement de la bande de store, transmettent des forces de déploiement sur une extrémité déployable de la bande de store, et qui présentent aux deux extrémités de l'arbre de store des poulies de câble montées coaxialement à l'arbre de store et rotatives par rapport à l'arbre de store, sachant qu'un ressort (6) précontraint dans l'état enroulé de la bande de store (1) est respectivement prévu entre chacune des deux poulies de câble (5) et l'arbre de store (2) et que les deux ressorts (6), lors du déroulement de la bande de store (1), exercent par l'intermédiaire des deux tirants à câble (3) des forces de déploiement sur l'extrémité déployable (4) de la bande de store, **caractérisé en ce que** la bande de store peut être enroulée sur l'arbre de store et déroulée de l'arbre de store au moyen de forces d'entraînement délivrées par un dispositif d'entraînement, sachant que les ressorts (6) s'appuient contre l'arbre de store (2) tourné dans la direction de déploiement de la bande par le dispositif d'entraînement (13), et que la poulie de câble (5) est rotative par rapport à l'arbre de store sur une plage angulaire déterminée qui est inférieure à 360°.

2. Store de fenêtre selon la revendication 1, **caractérisé en ce que** les deux ressorts (6) sont réalisés sous la forme de ressorts spiraux ou de ressorts à col de cygne, sachant que des extrémités intérieures (7) des ressorts sont reliées à l'arbre de store (2) et que des extrémités extérieures (8) des ressorts sont reliées aux poulies de câble (5).

3. Store de fenêtre selon la revendication 1 ou 2, **caractérisé en ce que** des parties d'arbre d'entraînement (9) qui sont reliées en solidarité de rotation à l'arbre de store (2) sont prévues aux deux extrémités de l'arbre de store (2), et les poulies de câble (5) et les ressorts (6) sont disposés sur les parties d'arbre d'entraînement (9).

4. Store de fenêtre selon l'une des revendications 1 à 3, **caractérisé en ce que** les poulies de câble (5) sont montées rotatives par rapport aux parties d'arbre d'entraînement (9).

5. Store de fenêtre selon l'une des revendications 1 à 4, **caractérisé en ce que** les ressorts (6) réalisés sous la forme de ressorts spiraux ou de ressorts à col de cygne sont respectivement disposés dans un boîtier de ressort (10) qui est relié en solidarité de rotation à la poulie de câble respective (5).

6. Store de fenêtre selon l'une des revendications 1 à 5, **caractérisé en ce que** le tirant à câble respectif (3) présente un élément de traction oblong (11) pouvant être enroulé sur la poulie de câble respective (5), l'une des extrémités de l'élément de traction étant reliée à l'extrémité déployable (4) du store et l'autre extrémité de l'élément de traction étant reliée à la poulie de câble respective (5).

7. Store de fenêtre selon l'une des revendications 1 à 6, **caractérisé en ce que** l'élément de traction (11) est dirigé sur une poulie de renvoi (12) qui est disposée sur la délimitation supérieure de fenêtre ou à proximité de la délimitation supérieure de fenêtre.

8. Store de fenêtre selon l'une des revendications 1 à 7, **caractérisé en ce que** l'arbre de store (2) peut être entraîné dans les deux sens de rotation par le dispositif d'entraînement (13).

9. Store de fenêtre selon l'une des revendications 1 à 8, **caractérisé en ce que** les parties d'arbre d'entraînement (9) sont des parties d'un arbre d'entraînement (2) d'un seul tenant s'étendant à travers l'arbre de store (2) réalisé creux, l'arbre d'entraînement étant relié en solidarité de rotation à l'arbre de store (2).

10. Store de fenêtre selon la revendication 1, **caractérisé en ce que** la plage angulaire est déterminée par des butées (14, 15) reliées en solidarité de rotation à la poulie de câble (5) et à l'arbre de store (2).

11. Store de fenêtre selon la revendication 10, **caractérisé en ce que** l'une (14) des butées est prévue sur le boîtier de ressort (10) relié en solidarité de rotation à la poulie de câble (5) et l'autre butée (15) est prévue sur la partie d'arbre d'entraînement (9).

12. Store de fenêtre selon l'une des revendications 1 à 11, **caractérisé en ce que** les axes de la poulie de câble (5) et de la poulie de renvoi (12) sont perpendiculaires ou parallèles entre eux.

13. Store de fenêtre selon l'une des revendications 1 à 12, **caractérisé en ce que** l'arbre de store (2) est monté à translation axiale pendant le mouvement d'enroulement et de déroulement de la bande de store (1).
